# EUROPEAN PATENT APPLICATION

(11) **EP 1 260 131 A1**
(43) Date of publication of application: **27.11.2002**
(21) Application number: 02253180.0
(22) Date of filing: 07.05.2002
(51) Int. Cl.: A01D 34/68

(54) **Grass-cutting machines**

(30) Priority: 23.05.2001 GB 0112530
(71) Applicant: Fowler, Robert Lawrence, Hatch Beauchamp, Somerset TA3 6SQ (GB)
(72) Inventor: Fowler, Robert Lawrence, Hatch Beauchamp, Somerset TA3 6SQ (GB)
(74) Representative: Brown, Michael Stanley

(57) **Abstract**

A grass-cutting machine includes a mower unit (17) and a motive unit (10, 12, 14) having means whereby it may be mounted releasably on the mower unit (17), the motive unit including a rotatable trimmer head (14).

## Description

### Field of the Invention

This invention relates to grass-cutting machines.

In most domestic gardens in the United Kingdom and in many other places around the world, grass cutting and collection is typically achieved by using a mower of some form to cut the grass and pick up the cuttings on the major part of a lawned area. On completion of this task, an additional tool may be used to trim the edges of the lawn and any areas which are inaccessible to the mower. This additional tool is likely to take the form of a trimmer incorporating a powered rotary nylon line or lines, a plastic safety blade or, in heavy-duty versions, a steel cutter blade.

On occasions, the roles may be reversed, as the mower may be unable to cut excessively long grass and the trimmer will then be used first to cut back the long grass sufficiently to allow the mower to be used to complete the task and give a more uniform cut and a superior finish.

It is an object of the present invention to provide a grass-cutting machine which is more versatile than the grass-cutting machines currently available.

### Summary of the Invention

According to the present invention there is provided a grass-cutting machine comprising:-
a) a mower unit including a cutting blade, and
b) a motive unit having means whereby it may be mounted releasably on the mower unit, the motive unit including means for driving the cutting blade,
the motive unit also including, or having, means whereby it may be connected to, a rotatable trimmer head.

The motive unit may include a handle which can be used to steer and propel the motive unit when separate from the mower to enable the motive unit to be used as a trimmer.

The arrangement is preferably such that the handle can be used to steer the mower when the motive unit is mounted on the mower.

In one embodiment of the invention the motive unit includes an electric motor and the handle includes a battery compartment for receiving batteries to power the electric motor.

An electrical battery for supplying power to the electric motor may be mounted on the mower unit.

The mower unit may have a housing which includes a hingedly mounted cover which can be fixed in a closed position and moved into an open position for mounting the motive unit on the mower unit and for removing the motive unit from the mower unit.

The motive unit may include a first location plate, the mower unit may include a second location plate and means may be provided for releasably connecting the two location plates.

### Brief Description of the Drawings

Figure 1 shows a motive power unit attached to a handle,

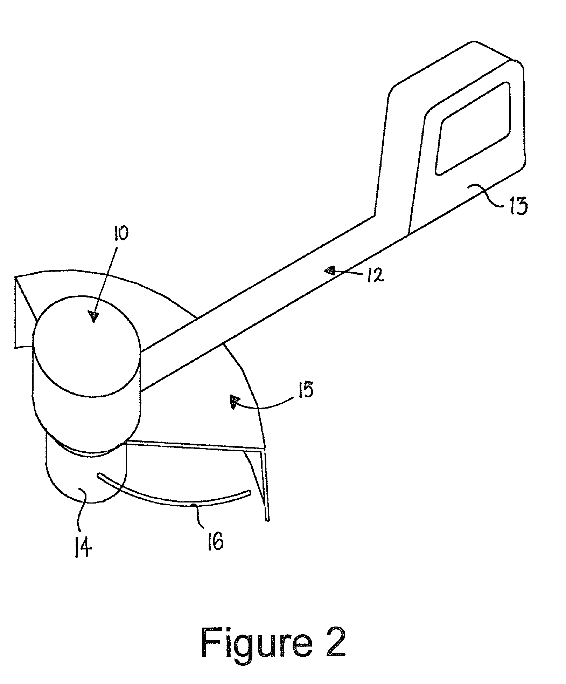

Figure 2 shows a removable unit comprising a trimmer head attached in a fixed or releasable manner to the motive power unit of Figure 1,
Figure 3 shows the removable unit of Figure 2 installed on a mower,
Figure 3A shows different forms of location plates which can be used to mount the unit of Figure 2 on a mower,
Figure 3B shows a modification to the arrangement of Figure 3A,
Figure 3C shows a further modification to the arrangement of Figure 3A,
Figure 4 shows a modification to the unit of Figure 2,
Figure 5 shows the unit of Figure 4 mounted on a mower,
Figure 6 shows a modification to the arrangement of Figure 5,
Figure 7 shows a modification to the arrangement of Figure 3, and
Figure 8 shows a further modification to the arrangement of Figure 3.

### Description of the Preferred Embodiments

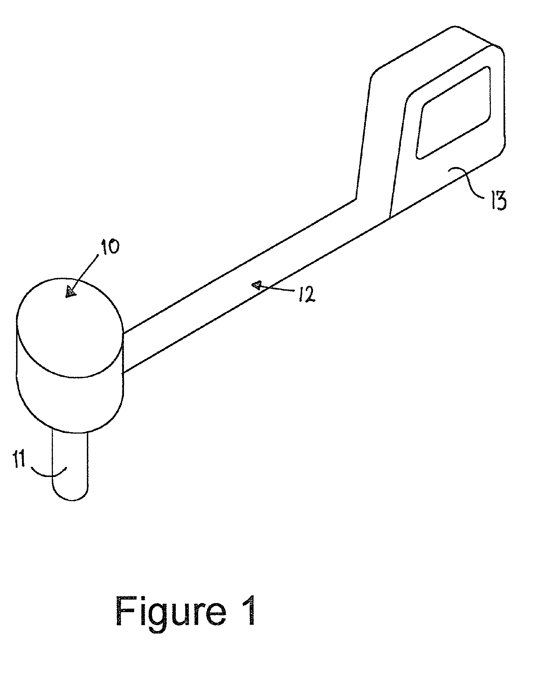

As shown in Figure 1, a motive power unit 10, capable of imparting rotational movement to a drive shaft 11, is attached to a handle 12 which is provided at its free end with a hand-grip formation 13.

The motive power unit 10 can be arranged to drive a trimmer head 14 mounted in a fixed or releasable manner on the drive shaft 11 and an arcuate guard or shield 15 can be fixed to the housing of the power unit 10. As shown, the trimmer head 14 is of the type which includes a nylon line 16, but it could be of the blade type.

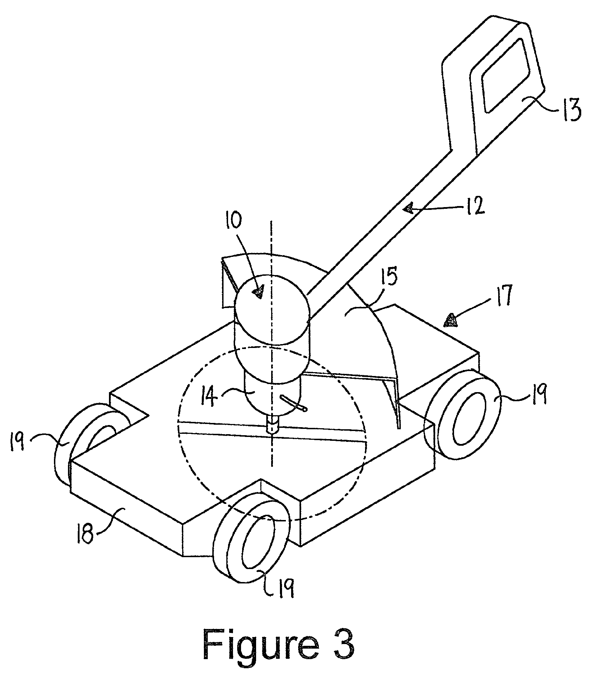

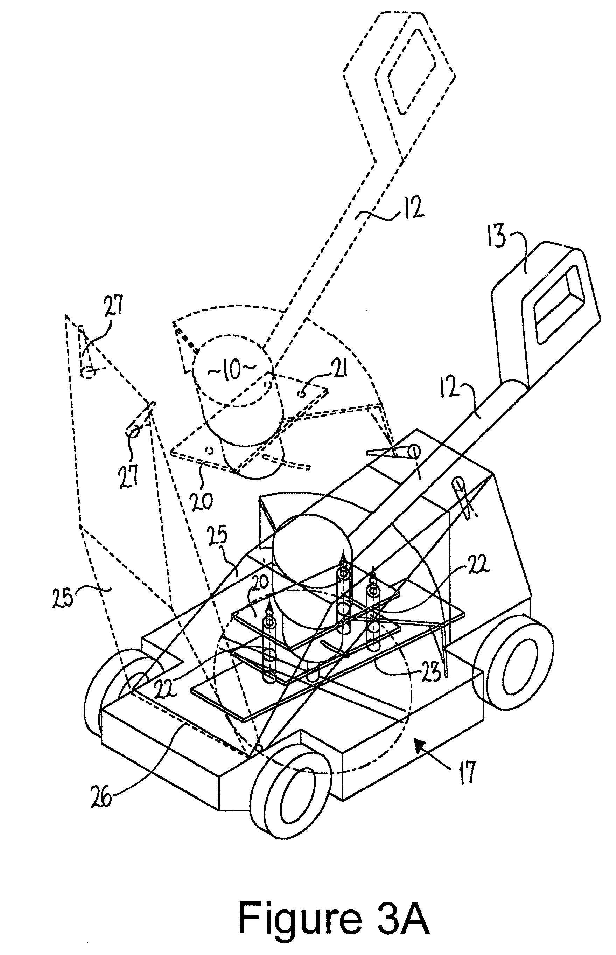

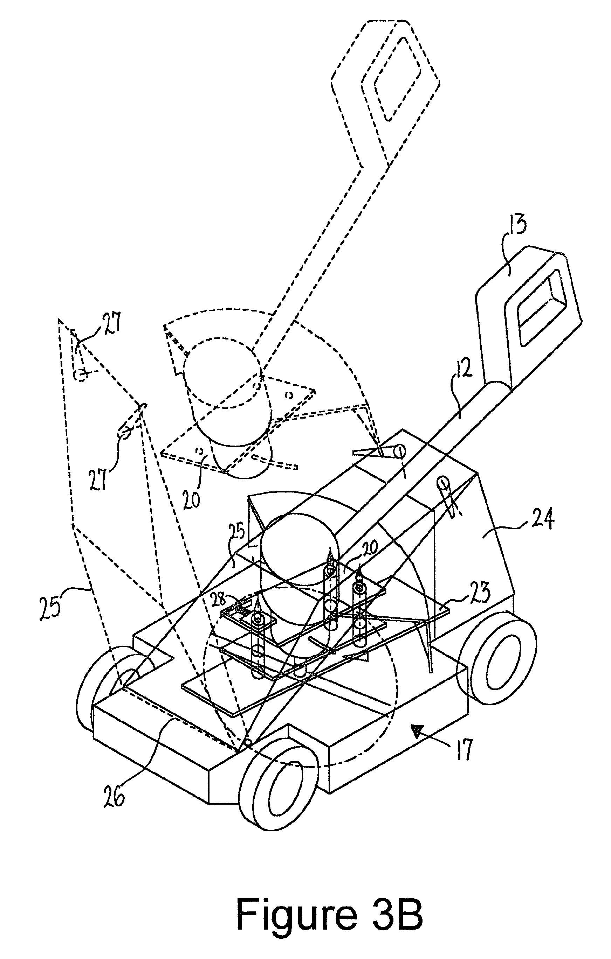

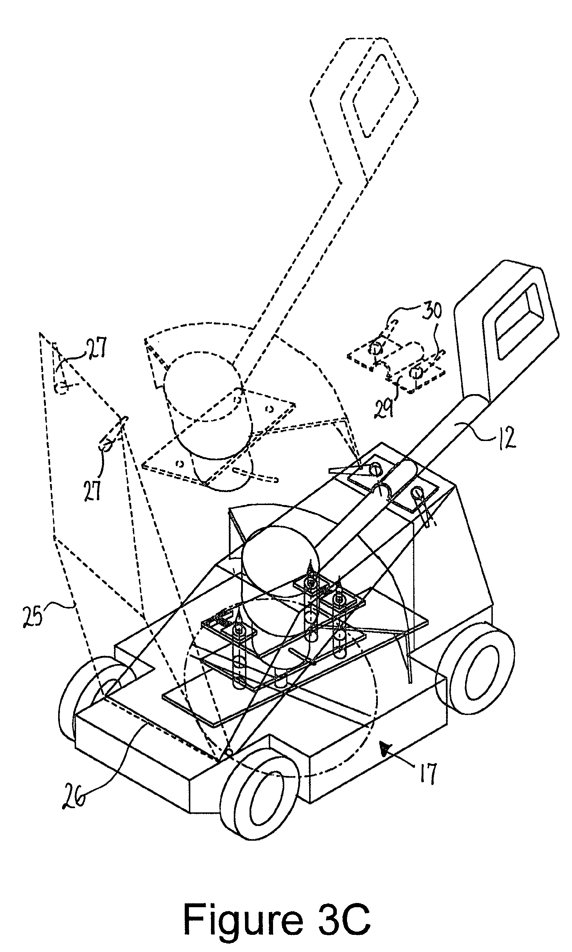

The assembly comprising the motive power unit 10 and the handle 12 (with or without the trimmer head 14), can be installed within a mower body 17, as shown in Figure 3. The mower body 17 includes a housing 18 and four wheels 19, and there are permanently installed mower cutter blades (not shown) beneath the housing 18. Drive from the motive power unit 10 may be permanently transmitted to the trimmer head 14 or the drive may be engaged and disengaged by, for example, a clutch, sliding gears, a separable coupling, separation of the trimmer head 14 from the motive power unit 10, or other means.

When the assembly comprising the motive power unit 10 and the handle 12 is installed within the mower body 17, using suitable location and clamping devices as shown in Figures 3A, 3B and 3C, drive can be transmitted to the mower blades (not shown) via an easily separable drive coupling, one part of which is installed on the motive unit 10 or trimmer head 14 (as applicable), with the other corresponding mating part being installed so as to drive the mower blades (not shown) directly or via a suitable transmission permanently installed within the mower.

A suitable reduction transmission may be included within the mower to allow the use of mower cutting blades having a larger cutting width (diameter) than the trimmer head 14 and line, as these may require higher torque but not such high rotational speeds. The mower cutting blade may be arranged to rotate about a substantially vertical axis or, in the case of a cylinder mower, will be arranged to rotate about a substantially horizontal axis.

As shown in Figure 3A, the motive power unit 10 can be mounted on the handle 12 complete with a first location plate 20 formed with holes 21 to receive locating pillar pins 22 carried by a second location plate 23 mounted on the mower body 17. A clamp support bracket 24 is mounted on the mower body 17 to provide secure support for the handle 12. The assembly comprising the motive power unit 10, handle 12 and first location plate 20 can be clamped in position by means of a cover 25 that, in use, is pressed down on top of the motive power unit 10 to clamp it in place. The cover 25 has a hinge 26 at one end and locking clasps or turn-buckle devices 27 at the other end. The cover 25 can be hinged open to allow removal of the motive power unit 10 with trimmer head 14 when so required.

The device as a whole can thus be used as a wheeled trimmer, or as a mower or as a separate trimmer, depending on the task which the user wishes to carry out.

Figure 3B shows an arrangement similar to Figure 3A, but differs therefrom in that the first location plate 20 carries a front slide latch or push-down sprung off-centre catch 28. The latch or catch 28 is arranged for release by means of a lever on the motive power unit 10 or by means of a pull cable on the handle 12.

Figure 3C shows a further arrangement similar to those of Figures 3A and 3B, but in this case the first location plate 20 carries three slide latches or push-down sprung off-centre catches 28. The latches or catches 28 are arranged for release by means of a lever on the motive power unit 10 or by means of a pull cable on the handle 12. In addition, a simple flanged collar 29 fitted over the handle 12 may be fixed by means of buckles 30 on top of the support bracket 24 on the body 17 of the mower.

The motive power unit 10 may be an electric motor, a hydraulic motor, an internal combustion engine, a steam engine, a heat engine or other prime mover. Its position relative to the trimmer cutting head 14 may be varied as required. For example, if the motive power unit 10 is an internal combustion engine, it may be positioned at the end of the handle 12 opposite to the trimming head 14 and the separable coupling for connection to the mower cutter. If, on the other hand, the motive power unit 10 is an electric motor, it may be positioned, as shown, at the same end of the handle 12 as the trimming head 14.

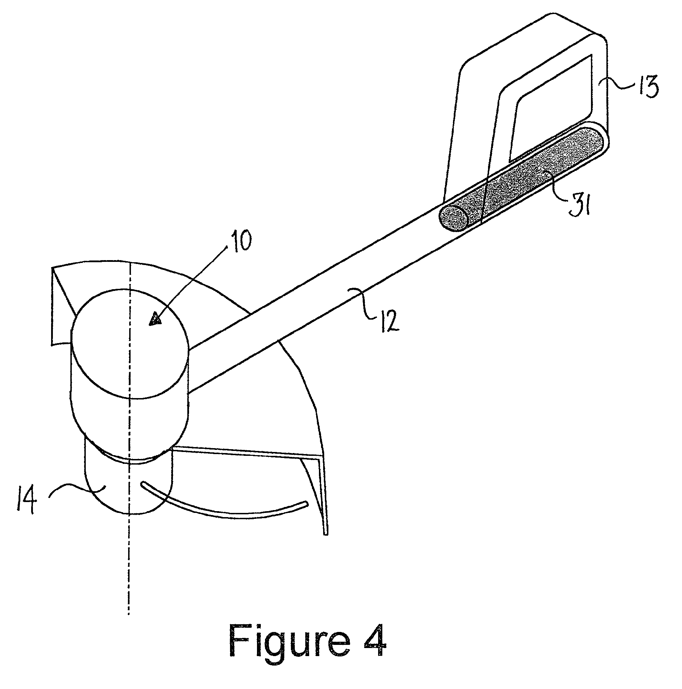

Figure 4 thus shows a motive power unit 10 which includes an electric motor which drives a trimming head 12, with the power for the electric motor provided by means of a battery or a set of batteries contained within a battery compartment 31 contained within the handle 12 at the end thereof remote from the motive power unit 10. The batteries within compartment 31 may supply electrical energy to the motor of unit 10 either on a long-term basis or on a short-term basis, i.e. when the assembly shown in Figure 4 is removed from the mower for use as a trimmer. When the assembly of Figure 4 is removed from the mower, the handle 12 is held by the user to steer and propel the trimmer. When the assembly of Figure 4 is mounted on the mower, the handle 12 can be used to steer and propel the mower.

When the assembly of Figure 4 is installed within the mower, the mower could be powered by an on-board power supply, with the trimmer batteries recharged from the power supply on the motor. The on-board power supply may be in the form of a battery, a fuel cell or other electrical storage or generating device. The mower could alternatively be powered from an external supply, which also serves to recharge the batteries within compartment 31. This refinement would allow the user short-term use of the trimmer unencumbered by any form of supply cable.

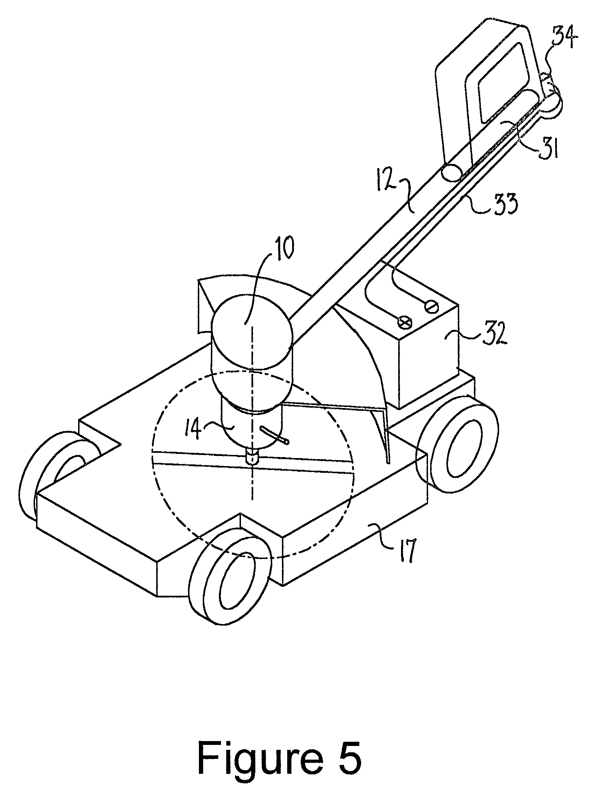

Figure 5 thus shows a mower which includes a battery 32 of substantial size which is mounted on the body 17 and is connected to the end of the handle 12 by means of a cable 33 to recharge the batteries within compartment 31 and/or to provide power to the motive power unit 10 to drive the motor blades. A link cable allowing stretch could also be used to allow continued use of the trimmer after the batteries in the handle compartment 31 are exhausted. There is a connector 34 at the end of the handle 12 (or at some other convenient position). This can be disconnected to enable the motive power unit 10 and the handle 12 to be removed from the mower and then run on the batteries contained within compartment 31.

As an alternative to the above, in the case of a mower with its own on-board electricity power supply or storage device, the battery compartment 31 could be omitted and a suitable stretchable link cable could be used instead.

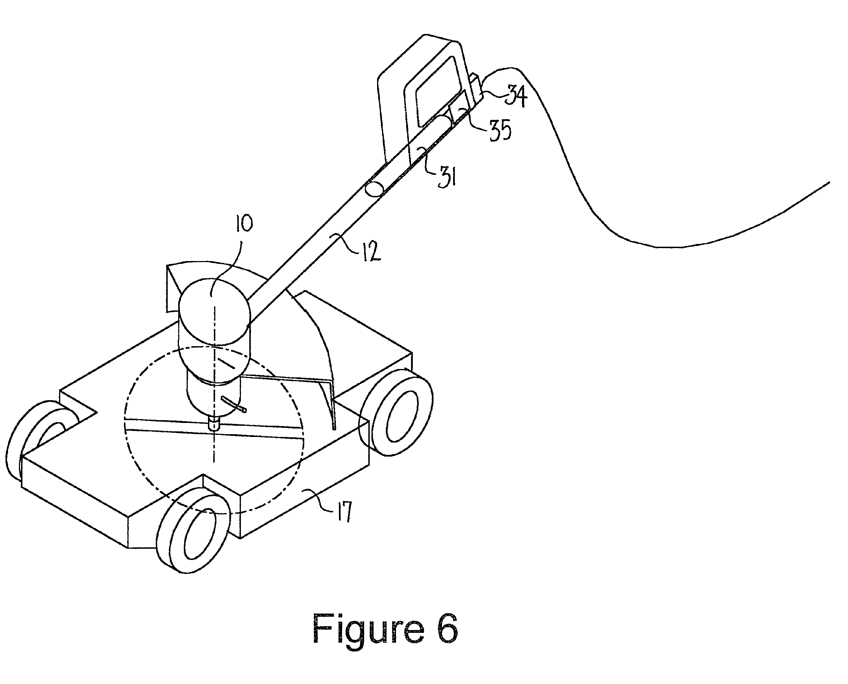

In the case of an electric motor drawing its power supply from a cable connected to a mains supply outlet, the motive unit 10 could be arranged as shown in Figure 6. The assembly comprising the unit 10 and handle 12 can then be connected directly, or by means of a connector 34, to the mains supply, and no link, cable or other connection to the mower would be necessary. Alternatively, a charger-type power supply transformer 35 could be incorporated within the handle 12 to recharge and/or bypass the batteries in the compartment 31.

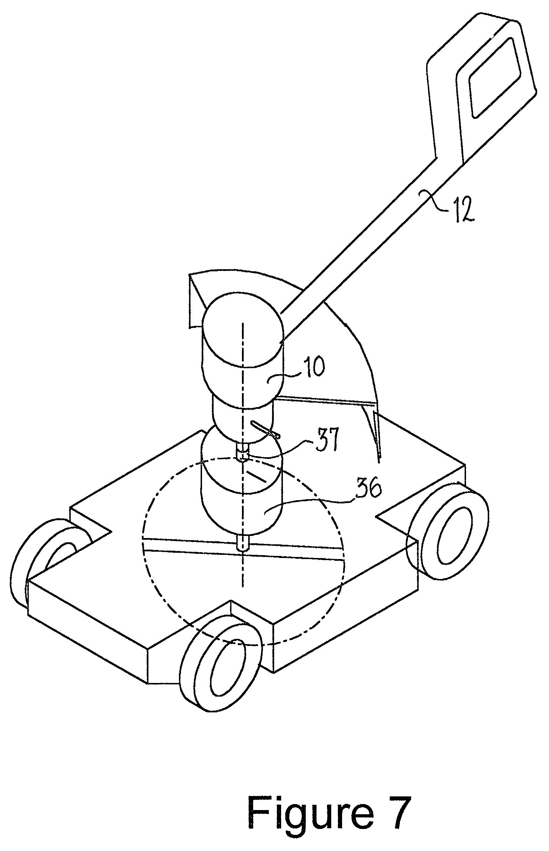

A further embodiment is shown in Figure 7 and includes a secondary motive power unit 36 permanently installed in the mower. The secondary motive power unit 36 drives the mower blades only when coupled to the primary motive power unit 10 which forms part of an assembly with the handle 12, all as described above. There is a separable coupling 37 between the primary motive power unit 10 and the secondary motive power unit 36. The coupling 37 can be a mechanical coupling (as shown) or an electrical coupling via a suitable shared mechanical transmission. The assembly comprising the primary motive power unit 10 and the handle 12 can thus be used in light-weight form for trimming and can also be combined with the secondary motive power unit 36 and the mower to produce increased power when installed within the mower to drive the mower blades.

The mower unit may incorporate more than one set of mower blades in order to achieve greater cutting widths. This may be achieved by the use of a module comprising a single set of mower blades and a single removable motive power unit and/or trimmer combination, the module being duplicated the required number of times within an enlarged mower body to achieve the desired mower cutting width. This would result in there being more than one removable motive power unit and/or trimmer on one mower.

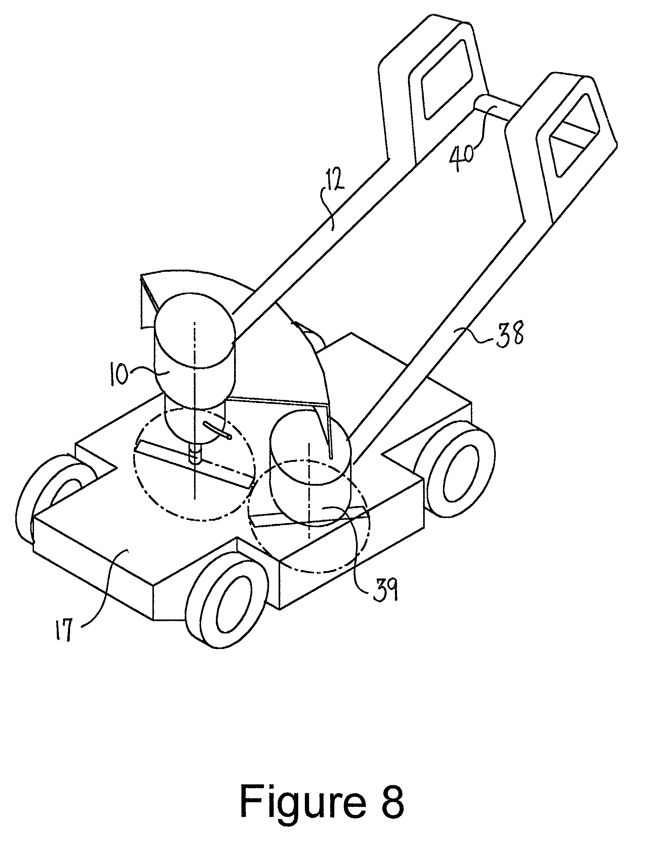

Where only one removable motive power unit and/or trimmer head combination is required, the arrangement shown in Figure 8 can be utilised. This includes a fixed handle 38 and a permanently installed motive power unit 39 arranged to drive a mower blade or blade set. The mower housing 17 has a width sufficient to accommodate two motive power units though, if an arrangement including two or more permanently installed motive power units 39 were required, the mower housing 17 would then be of correspondingly greater width. As shown, the handle 12 of the removable motive power unit can be connected to the fixed handle 38 by a connector 40 to provide a readily steerable handle assembly.

The mower itself may be a wheeled mower, a hover mower, a mower mounted on rollers or other form of mower. It may be pedestrian-controlled and/or propelled or self-propelled or ride-on, as required. The mower may be capable of cutting the grass and collecting the grass cuttings as an alternative to only cutting the grass. For a mower having a facility for collecting the grass cuttings, many different ways of providing this facility may be utilised. For example, the cutting blade(s) of the mower could incorporate negative pressure or vacuum-generation means and suck up the grass cuttings into a suitable collection bag or container. Other means for this purpose include blades that create a sweeping motion or fan effect, sweeping brushes or blades powered by an additional motive unit or via a suitable transmission system.

The mower may have one or more cutting blades of any suitable material or type. The mower may thus be a rotary mower, a cylinder mower, a reel mower, a flail mower or the like.

## Claims

1. A grass-cutting machine comprising:-
a) a mower unit including a cutting blade, and
b) a motive unit having means whereby it may be mounted releasably on the mower unit, the motive unit including means for driving the cutting blade,
the motive unit also including, or having, means whereby it may be connected to, a rotatable trimmer head.

2. A grass-cutting machine as claimed in Claim 1, in which the motive unit includes a handle which can be used to steer and propel the motive unit when separate from the mower to enable the motive unit to be used as a trimmer.

3. A grass-cutting machine as claimed in Claim 2, in which the handle can be used to steer the mower when the motive unit is mounted on the mower.

4. A grass-cutting machine as claimed in Claim 2 or Claim 3, in which the motive unit includes an electric motor and the handle includes a battery compartment for receiving batteries to power the electric motor.

5. A grass-cutting machine as claimed in any one of the preceding claims, in which the motive unit includes an electric motor and an electrical battery is mounted on the mower unit.

6. A grass-cutting machine as claimed in any one of the preceding claims, in which the mower unit has a housing which includes a hingedly mounted cover which can be fixed in a closed position and moved into an open position for mounting the motive unit on the mower unit and for removing the motive unit from the mower unit.

7. A grass-cutting machine as claimed in any one of the preceding claims, in which the motive unit includes a first location plate, the mower unit includes a second location plate and means are provided for releasably connecting the two location plates.
